# EUROPÄISCHE PATENTSCHRIFT

(11) **EP 3 798 412 B1**
(45) Veröffentlichungstag und Bekanntmachung des Hinweises auf die Patenterteilung: **04.05.2022**
(21) Anmeldenummer: 19200417.4
(22) Anmeldetag: 30.09.2019
(51) Int. Cl.: F01B 17/04, F01K 7/00, F01L 17/00

(54) **DAMPFMOTOR SOWIE EINE DEN DAMPFMOTOR AUFWEISENDE KRAFT-WÄRME-KOPPLUNGSANLAGE**
STEAM ENGINE AND COMBINED HEAT AND POWER PLANT COMPRISING THE STEAM ENGINE
MOTEUR À VAPEUR AINSI QU'INSTALLATION DE PRODUCTION COMBINÉE ÉLECTRICITÉ-CHALEUR COMPORTANT LE MOTEUR À VAPEUR

(43) Veröffentlichungstag der Anmeldung: 31.03.2021
(73) Patentinhaber: RD Estate GmbH & Co. KG, 94469 Deggendorf (DE)
(72) Erfinder: Duschl, Robert, 94469 Deggendorf (DE)
(74) Vertreter: Hoffmann Eitle

(56) Entgegenhaltungen:
- WO-A1-2016/146159
- DE-A1-102011 116 295
- US-A- 4 213 377
- US-A- 4 889 034
- US-A1- 2016 230 605

## Beschreibung

### Technisches Gebiet

Die vorliegende Offenbarung betrifft einen Kolbendampfmotor, zum Beispiel einen Kolbendampfmotor der mechanische Arbeit unter Verwendung von Dampf als sein Arbeitsfluid verrichtet. Genauer betrifft die vorliegende Offenbarung einen Kolbendampfmotor, der bevorzugt in der Erzeugung von Strom Anwendung findet. Des Weiteren betrifft die vorliegende Offenbarung eine den vorher genannten Kolbendampfmotor aufweisende Kraft-Wärme-Kopplungsanlage.

### Hintergrund

Dezentrale Kraft-Wärme-Kopplungsanlagen (KWK-Anlagen) haben sich bereits seit längerer Zeit als vorteilhafte Alternative zur herkömmlichen Kombination von lokaler Heizung und zentralem Stromkraftwerk etabliert. KWK-Anlagen werden zur Gewinnung von elektrischer Energie und der Gewinnung von Nutzwärme genutzt, insbesondere werden KWK-Anlagen vorzugweise am Ort oder in der Nähe der Nutzwärmesenke betrieben. Als Antrieb für den Stromerzeuger können zum Beispiel Verbrennungsmotoren, wie Diesel- oder Ottomotoren, Stirlingmotoren, Dampfmotoren, Brennkraftturbinen oder Dampfmaschinen verwendet werden.

Hinsichtlich KWK-Anlagen hat in jüngster Zeit insbesondere die Verwendung von Kolbendampfmotoren an Interesse gewonnen. Dies liegt vorrangig an dem erzielbaren hohen Gesamtwirkungsgrad bei gleichzeitig geringem Schadstoffausstoß und der fast freien Wahl des flüssigen oder festen Brennstoffs, wie beispielsweise Holz, Pellets, Biogas, oder Biomasse. Der hohe Wirkungsgrad kann durch Dampfdrücke von 40 bar bis 150 bar und Dampftemperaturen von ca. 300 bis 600 °C erzielt werden. Kolbendampfmotoren finden aufgrund der genannten Vorteile auch Anwendung in kleineren Anlagen zur Biomasseverstromung, Abwärmeverstromungsanlagen, Abfallverbrennungsanlagen und thermischen Nachverbrennungsanlagen.

Bekannte Kolbendampfmotoren, wie beispielsweise der in WO 2016/146159 A1 beschriebene, welche insbesondere für die Stromerzeugung verwendet werden, weisen jedoch den Nachteil auf, dass zum Beispiel beim Kaltstart eine relativ hohe Undichtigkeit auftritt. Dies liegt insbesondere daran, dass der in den Kolbendampfmotor eingespritzte Wasserdampf (Heißdampf bzw. Frischdampf) mit einem Druck von 40 bar bis 150 bar in relativ kurzer Zeit in den Kolbenraum eingespritzt wird und dort lange wirkt, was eine hohe Anforderung an die Kolbenringdichtung, welche den Wasserdampf vom Schmieröl im Kurbelwellenraum bzw. in der Ölwanne trennt, stellt.

Um dem entgegenzuwirken wird beispielsweise einem Kolbendampfmotor mit vier Zylindern ca. 1 Liter Öl pro Minute zur Feinabdichtung des Motors und zur Unterdrückung eines "Blow-By-Effekts", der ansonsten aufgrund des hohen Wasserdampfdrucks entstehen würde, zugeführt. Dabei wird das Öl zwischen Kolben und Zylinderwand eingebracht. Aufgrund der Reduktion des Drucks im Kolbenraum auf ca. 0,15 bar, entsteht eine starke Sogleistung, so dass sich das zur Feinabdichtung eingespritzte Öl mit dem entspannten Wasserdampf vermischt und mit diesem ausgegeben wird. Ferner werden gattungsgemäße Kolbendampfmotoren oft im Gleichstromprinzip betrieben, um die Effizienz des Kolbendampfmotors weiter zu steigern. Dies macht es jedoch notwendig, im Bereich des unteren Totpunkts Auslassöffnungen vorzusehen, um den verbrauchten Wasserdampf aus dem Arbeitsraum auslassen zu können. Damit ist jedoch das Problem verbunden, dass der an der Zylinderwand anhaftende Ölfilm durch die Auslassöffnungen angesaugt und nach Außen abgeführt wird. Dieser Effekt wird zusätzlich durch den von oben anstehenden hohen Druck des Heißdampfs verstärkt, welcher den Ölfilm in Richtung der Auslassöffnungen drängt. Durch die genannten Rahmenbedingungen neigt der an der Zylinderwand anhaftende Ölfilm dazu schnell abzureißen bzw. zu degenerieren, was zu hohem Verschleiß am Kolben sowie an der Zylinderinnenwand bzw. Arbeitswand führen kann.

Dem Kolbendampfmotor ist im Allgemeinen ein Kondensator nachgeschaltet, welcher den Wasserdampf kondensiert und einer Zirkulationspumpe bzw. Kondensat-Absaugpumpe, insbesondere einer Kolbenpumpe, zuführt bzw. das Kondensat von dieser abgesaugt wird. Die Zirkulationspumpe bzw. Kondensat-Absaugpumpe führt dann das kondensierte Wasser, in dem wie vorher beschreiben ein großer Anteil an Öl enthalten sein kann, einem Speisewassertank zu, um das kondensierte Wasser für einen Dampferzeuger für die Erzeugung des benötigten Heißdampfs bzw. Frischdampfs für den Betrieb des Kolbendampfmotors bereitzustellen. Da das in dem kondensierten Wasser enthaltene Öl jedoch zu einer Degeneration des Wassers und aufgrund der hohen Temperatur im Dampferzeuger, insbesondere des erzeugten Heißdampfs, zu unerwünschten Ablagerungen führen kann, ist es notwendig, das Öl mittels eines Ölabscheiders vom kondensierten Wasser zu trennen. Deswegen wird in der Regel zischen Kondensator und Speisewassertank ein Ölabscheider bzw. eine Vorrichtung zum Trennen von Öl und Wasser vorgesehen. Dies ist auch notwendig, um die großen Mengen an Öl, welche in dem kondensierten Wasserdampf enthalten sind, zurückzugewinnen und dem Kolbendampfmotor wieder zuführen zu können.

### Gegenstand der Erfindung

Der Erfindung liegt die Aufgabe zu Grunde, einen Kolbendampfmotor bereitzustellen, der in der Lage ist, den notwendigen Öldurchsatz der für die Feinabdichtung des Kolbendampfmotors, insbesondere eines in einem Zylinder des Kolbendampfmotos laufenden Kolbens, zu verringern und gleichzeitig ein möglichst langes Wartungsintervall, eine leichte Montage und geringe Fertigungskosten ermöglicht.

Diese Aufgabe wird gelöst durch einen Kolbendampfmotor nach Anspruch 1 sowie eine den Kolbendampfmotor aufweisende Kraft-Wärme-Kopplungsanlage nach Anspruch 14. Bevorzugte Weiterbildungen der Erfindung sind in den abhängigen Ansprüchen gegeben, wobei der Gegenstand der den Kolbendampfmotor betreffenden Ansprüche im Rahmen der Kraft-Wärme-Kopplungsanlage zum Einsatz kommen kann und umgekehrt.

Hierbei ist einer der Grundgedanken der vorliegenden Offenbarung, Öl-Einspritzöffnungen derart in einer Wand (Arbeitsraumwand) eines Arbeitsraums vorzusehen, dass es ermöglicht wird, Öl auf eine Weise zwischen die Zylinderwand (Arbeitsraumwand) und den Kolben einzubringen, dass das eingebrachte Öl einerseits nicht direkt durch Auslassöffnungen, die vorgesehen sind um den verbrauchten Dampf aus den Arbeitsraum auszustoßen, angesaugt und somit aus dem Spalt zwischen Kolben und Zylinderwand abgesaugt wird, und andererseits ein Einspritzen des Öls durch die Öl-Einspritzöffnungen durch einen in dem Arbeitsraum wirkenden zu hohen Arbeitsdruck des Dampfs verhindert bzw. erschwert wird. Dies wird dadurch erreicht, dass eine Vielzahl von Öl-Einspritzöffnungen in der Arbeitsraumwand oberhalb der Auslassöffnungen vorgesehen ist.

Gemäß einem Aspekt weist ein Kolbendampfmotor, insbesondere ein Kolbendampfmotor der bevorzugt für die Erzeugung elektrischen Stroms verwendet wird, auf: mindestens einen Zylinder, der einen Arbeitsraum umschließt, einen im Arbeitsraum zwischen einem oberen Totpunkt OT und einem unteren Totpunkt UT entlang einer Zentralachse CA des Zylinders hin und her beweglichen Kolben, wobei der Arbeitsraum über seinen Umfang von einer in den Zylinder eingesetzten oder durch diesen gebildeten Arbeitsraumwand umschlossen ist, und eine Vielzahl von Auslassöffnungen, insbesondere Abgas-Auslassöffnungen, die in Umfangsrichtung in der Arbeitsraumwand vorgesehen sind, wobei oberhalb der Auslassöffnungen eine Vielzahl von Öl-Einspritzöffnungen, bevorzugt in Umfangsrichtung verteilt, in der Arbeitsraumwand vorgesehen ist.

Gemäß einem weiteren Aspekt der vorliegenden Offenbarung sind bei dem Kolbendampfmotor die Abgas-Auslassöffnungen in einem ersten ringförmigen Bereich angeordnet, der in Umfangsrichtung der Arbeitsraumwand, insbesondere senkrecht zur Zentralachse CA, verläuft und bevorzugt in Richtung der Zentralachse CA gesehen eine Breite B₁ von 80 bis 120 mm, bevorzugt 50 bis 80 mm, weiter bevorzugt 20 bis 40 mm aufweist.

Hierbei wird unter "Abgas" verbrauchter Heißdampf verstanden. Mit anderen Worten Wasserdampf, der wie oben beschrieben unter hohem Druck und hoher Temperatur in den Arbeitsraum des Kolbendampfmotors eingeleitet wurde, einen Arbeitshub ausgeführt hat und sich dabei entspannt und abgekühlt hat.

Des Weiteren ist es vorteilhaft, wenn die Öl-Einspritzöffnungen in einem zweiten ringförmigen Bereich angeordnet sind, der in Umfangsrichtung der Arbeitsraumwand, insbesondere senkrecht zur Zentralachse CA, verläuft und bevorzugt in Richtung der Zentralachse CA gesehen eine Breite B₂ von 5 bis 10 mm, weiter bevorzugt von 2 bis 5 mm, weiter bevorzugt von 1 bis 2 mm aufweist.

Ferner ist es bevorzugt, dass ein Abstand A₁ zwischen dem ersten ringförmigen Bereich der Auslassöffnungen und dem zweiten ringförmigen Bereich der Öl-Einspritzöffnungen in Richtung der Zentralachse CA gesehen in einem Bereich von 10 bis 50 mm, bevorzugt 15 bis 40 mm, weiter bevorzugt 20 bis 35 mm liegt.

Auf diese Weise kann gewährleistet werden, dass die Öl-Einspritzöffnungen ausreichend weit von den Auslassöffnungen beabstandet sind, so dass beim Einspritzen des Öls durch die Öl-Einspritzöffnungen zum Bilden eines Lauffilms (Ölfilms) zwischen der Zylinderwand (Arbeitsraumwand) und dem Kolben vermieden werden kann, dass das eingespritzte Öl direkt durch die Auslassöffnungen angesaugt und damit aus dem Spalt zwischen Kolben und Arbeitsraumwand abgesaugt wird. Damit kann ein ausreichender Lauffilm aus Öl gewährleistet und damit eine Abdichtung des Arbeitsraums gegen den oben beschriebenen "Blow-By-Effekts" erzielt werden, wodurch die notwendige Ölmenge zur Feinabdichtung des Arbeitsraums drastisch reduziert werden kann. Ferner kann hierdurch ein für den Verschleißschutz des Kolbens, der Kolbenringe und der Zylinderwand notwendiger Ölfilm sichergestellt werden.

Andererseits wird auf diese Weise sichergestellt, dass die Öl-Einspritzöffnungen nicht zu nahe am oberen Totpunkt OT angeordnet sind und somit in einem Bereich vorgesehen sind, in dem nicht der maximale Dampf- bzw. Arbeitsdruck des Zylinders herrscht. Somit kann verhindert werden, dass das Öl, dass zu den Öl-Einspritzöffnungen gefördert wird, durch den zu hohen Arbeitsdruck im Arbeitsraum zurückgedrängt und damit die Schmierung bzw. Abdichtung kurzzeitig unterbrochen wird. Ferner kann dadurch vermieden werden, dass der Expansionsvorgang beim Einleiten des Heißdampfs in den Arbeitsraum durch das eingespritzte Öl beeinträchtigt wird, was du einer Reduktion der Leistung bzw. Effizienz des Kolbendampfmotors führen würde.

Des Weiteren ist es vorteilhaft, wenn der erste ringförmige Bereich der Auslassöffnungen, insbesondere eine gedachte Mittellinie des Bereichs, die senkrecht zur Zentralachse CA verläuft, vom unteren Totpunkt UT in Richtung des oberen Totpunkts OT um 5% bis 25%, bevorzugt 10% bis 20%, des Kolbenhubs beabstandet angeordnet ist.

Unter Kolbenhub versteht man die Strecke bzw. Distanz, die der Kolben vom unteren Totpunkt UT bis zum oberen Totpunkt OT bei seiner Arbeitsbewegung zurücklegt.

Ferner ist es bevorzugt, dass der zweite ringförmige Bereich der Öl-Einspritzöffnungen, insbesondere eine gedachte Mittelinie des Bereichs, die senkrecht zur Zentralachse CA verläuft, vom oberen Totpunkt OT in Richtung des unteren Totpunkts UT um mindestens 40% des Kolbenhubs und um maximal 60% des Kolbenhubs beabstandet angeordnet ist.

Gemäß einer weiteren Ausführungsform der vorliegenden Offenbarung weisen die Öl-Einspritzöffnungen, welche in der Form einer Bohrung ausgebildet sind, einen Durchmesser von weniger als 3 mm, bevorzugt weniger als 2 mm, auf.

Ferner ist es bevorzugt, dass die Öl-Einspritzöffnungen jeweils in Umfangsrichtung zwischen den Auslassöffnungen angeordnet sind, bevorzugt mittig zwischen den Auslassöffnungen angeordnet sind. Mit anderen Worten sind die Öl-Einspritzöffnungen jeweils auf einer gedachten Linie, die parallel zur Zentralachse CA verläuft und zwischen zwei Auslassöffnungen, insbesondere mittig zwischen zwei Auslassöffnungen angeordnet ist, angeordnet.

Des Weiteren ist es vorteilhaft, wenn die ÖL-Einspritzöffnungen um den Umfang, insbesondere den vollständigen Umfang, der Arbeitsraumwand gleichmäßig verteilt angeordnet sind und bevorzugt zwölf, weiter bevorzugt acht, Öl-Einspritzöffnungen vorgesehen sind.

Alternativ besteht auch die Möglichkeit, die Öl-Einspritzöffnungen am Umfang der Arbeitsraumwand lediglich über einen bestimmten Winkelbereich oder Winkelbereiche, insbesondere zwei Winkelbereiche, beispielsweise über einen Winkelbereich von 70 bis 120 Grad, gleichmäßig verteilt anzuordnen. Hierbei ist es ferner vorteilhaft, wenn der/die Winkelbereich(e) mit den Öl-Einspritzöffnungen jeweils an den Seiten der Arbeitsraumwand bzw. der Zylinderwand angeordnet ist, an welchen während des Betriebs des Motors der Kolben anliegt. Des Weiteren ist es bevorzugt, dass vier Öl-Einspritzöffnungen in dem Winkelbereich vorgesehen sind. Hierbei können wie oben bereits beschrieben, die Öl-Einspritzöffnungen in Umfangsrichtung ebenfalls jeweils zwischen den Auslassöffnungen vorgesehen sein.

Ferner kann die Position der Winkelbereiche mit Öl-Einspritzöffnungen, welche sich über einen Winkelbereich von 70 bis 120 Grad erstrecken können, in Bezug auf die Achse der Pleuelstange (PA) des Kolbens definiert werden. Die Mitte der Winkelbereiche mit Einspritzöffnungen kann in Bezug auf die Achse der Pleuelstangen in Umfangsrichtung um 90° verschoben angeordnet sein, womit die beiden Winkelbereiche mit Einspritzöffnungen jeweils an der Anlageseite des Kolbens während des Betriebs angeordnet sind.

Gemäß einer weiteren Ausführungsform weist der Kolbendampfmotor einen Ringkanal auf, der an der Außenseite der Arbeitsraumwand vorgesehen ist und die Öl-Einspritzöffnungen derart miteinander verbindet, dass diese zentral, bevorzugt über einen gemeinsamen Öl-Anschluss, mit Öl versorgbar sind.

Hierbei ist es insbesondere bevorzugt, dass der Ringkanal durch eine Ringnut, die an der Außenseite der Arbeitsraumwand vorgesehen ist, und eine Abdeckung, welche an der Außenseite der Arbeitswand angebracht ist, ausgebildet ist. Hierbei kann die Abdeckung anhand einer Dichtung abgedichtet oder durch Anschweißen an die Außenseite der Arbeitswand fluiddicht abgedichtet sein.

Des Weiteren ist es vorteilhaft, wenn der Kolbendampfmotor eine Steuerung aufweist, oder durch eine externe Steuerung, beispielsweise eine zentrale Steuereinheit einer Kraft-Wärme-Kopplungsanlage gesteuert wird, die dazu eingerichtet ist, eine Öl-Versorgungseinrichtung derart zu steuern, dass die Öl-Einspritzöffnungen kontinuierlich oder diskontinuierlich mit Öl versorgt werden.

Hierbei ist es ferner bevorzugt, dass die Steuerung im Falle einer diskontinuierlichen Einspritzung das Öl in den Arbeitsraum nur dann einspritzt, wenn sich eine Oberseite des Kolbens oberhalb der Auslassöffnungen befindet. Mit anderen Worten, die Auslassöffnungen durch den Kolben verdeckt bzw. verschlossen sind. Auf diese Weise wird vermieden, dass das in den Arbeitsraum bzw. in den Spalt zwischen dem Kolben und der Arbeitsraumwand eingespritzte Öl direkt durch die Auslassöffnungen abgesaugt wird.

Weiter bevorzugt ist es, wenn die Steuerung im Falle einer diskontinuierlichen Einspritzung das Öl nur dann einspritzt, wenn sich die Oberseite des Kolbens oberhalb der Öl-Einspritzöffnungen befindet. Mit anderen Worten, die Öl-Einspritzöffnungen durch den Kolben verdeckt sind, wodurch sichergestellt wird, dass das Öl in den Spalt zwischen dem Kolben und der Arbeitsraumwand eingespritzt wird. Ferner ist es bevorzugt, dass die durch die Öl-Einspritzöffnungen eingespritzte Ölmenge leistungsabhängig eingestellt wird. Mit anderen Worten wird die Leistung des Kolbendampfmotors gesteigert, wird ebenfalls die in den Arbeitsraum eingespritzte Ölmenge erhöht.

Ebenfalls ist es bevorzugt, dass das Öl mit einem Druck von 0,5 bis 5 bar, weiter bevorzugt 1 bis 2 bar, durch die Öl-Einspritzöffnungen eingespritzt wird. Auf diese Weise wird sichergestellt, dass das Öl nicht wörtlich in den Arbeitsraum eingespritzt wird, sondern lediglich langsam aus den Öl-Einspritzöffnungen quillt und somit direkt an der Zylinderwand anhaftet.

Es ist ebenfalls vorteilhaft, wenn der Kolbendampfmotor mit einer Druckdämpfungsleitung versehen ist, welche zwischen dem Öl-Anschluss des Ringkanals und der Öl-Versorgungseinrichtung angeordnet ist und aus einer gewickelten Leitung mit einer Länge von 3 bis 5 Metern besteht. Hierbei ist es ferner bevorzugt, dass wie Leitung mit einem Wicklungsdurchmesser von 40 bis 60 mm gewickelt ist. Ferner weist die Leitung bevorzugt einen Durchmesser von 5 bis 10 mm auf.

Gemäß einer weiteren Ausführungsform weist die Druckdämpfungsleitung an dem der Öl-Versorgungseinrichtung zugewandten Ende der Leitung ein Rückschlagventil auf, welches in Richtung der Öl-Versorgung bei Druckspitzen schließt. Mit anderen Worten schließt das Rückschlagventil entgegen der Förderrichtung des Öls. Es können auch an beiden Enden der Druckdämpfungsleitung Rückschlagventile vorgesehen sein, die entgegen der Förderrichtung des Öls schließen.

Hierbei ist es ferner vorteilhaft, wenn jeder Zylinder des Kolbendampfmotors mit einer eigenen Druckdämpfungsleitung versehen ist, welche über eine gemeinsame Rail mittels der Öl-Versorgungseinrichtung mit Öl versorgt werden. Ferner besteht die Möglichkeit, mittels eines Durchflusssensors die genaue Durchflussmenge und somit in die Zylinder des Kolbendampfmotors eingespritzte Ölmenge zu bestimmen und leistungsabhängig zu steuern.

Ferner betrifft die vorliegende Offenbarung eine Kraft-Wärme-Kopplungsanlage, welche einen Dampferzeuger und den oben beschriebenen Kolbendampfmotor aufweist, wobei der Kolbendampfmotor mit einem Generator zur Erzeugung elektrischen Stroms gekoppelt ist.

Auf diese Weise wird eine Kraft-Wärme-Kopplungsanlage zur Verfügung gestellt, welche einen reduzierten Öl-Durchsatz in Bezug auf die Feinabdichtung des Kolbendampfmotors aufweist, wodurch es ermöglicht wird, den oben beschriebenen Ölabscheider, der zum Trennen des im kondensierten Wasserdampf (Abgas des Kolbendampfmotors) enthaltenen Öls verwendet wird, kleiner zu dimensionieren und dennoch eine Degeneration des Wassers und des Wasserkreislaufs, insbesondere des Kolbendampferzeugers, zu vermeiden. Anhand der bereitgestellten Kraft-Wärme-Kopplungsanlage ist es möglich, den bisher üblichen Öl-Durchsatz von ca. 0,2 Liter pro Minute und je Zylinder auf 0,05 Liter pro Minute und je Zylinder zu reduzieren.

### Kurze Beschreibung der Figuren

Fig. 1 zeigt ein schematisches Diagramm einer Kraft-Wärme-Kopplungsanlage,
Fig. 2 zeigt eine schematische Schnittdarstellung eines Dampfmotors gemäß einer Ausführungsform der vorliegenden Erfindung, wobei der Kolben sich im unteren Totpunkt befindet, und
Fig. 3 zeigt eine vergrößerte Teilansicht der schematischen Schnittdarstellung von Fig. 2, um die Anordnung der erfindungsgemäßen Öl-Einspritzöffnungen zu verdeutlichen.

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um weitere Ausführungsformen auszubilden.

Dabei sind in den verschiedenen Figuren gleiche oder entsprechende Elemente jeweils mit den gleichen oder ähnlichen Bezugszeichen bezeichnet.

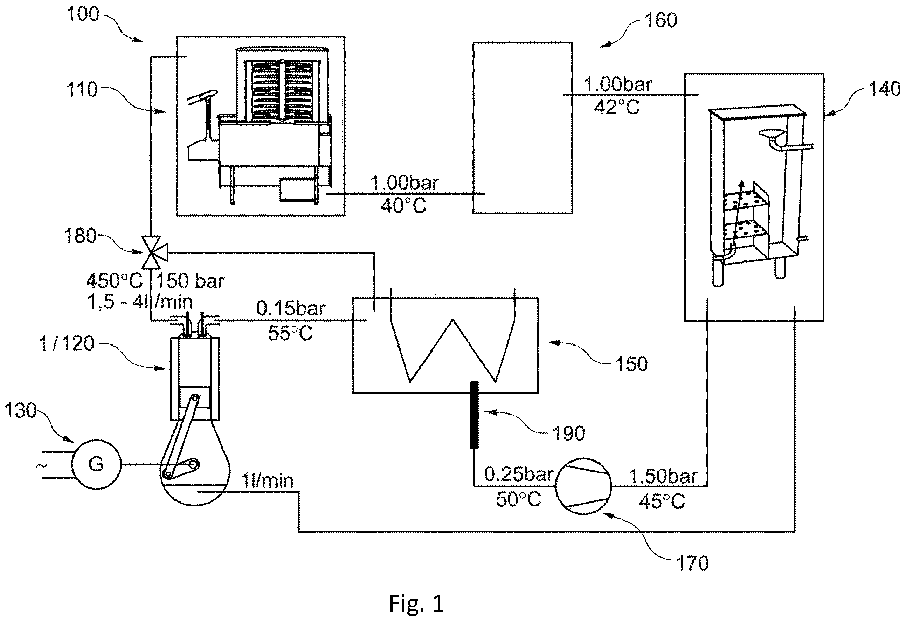

Fig. 1 zeigt ein schematisches Diagramm einer Kraft-Wärme-Kopplungsanlage (KWK-Anlagen). Die gezeigte KWK-Anlage 100 besteht aus einem Dampferzeuger 110, welcher über ein Ventil 180 mit einem Einlass eines Dampfmotors 1, 120 verbunden ist, welcher einen Generator 130 zur Erzeugung von Strom antreibt. Wie oben bereits erläutert, ist es zur Feinabdichtung des Dampfmotors 1, 120 notwendig, diesen mit Öl zu versorgen, welches sich während des Betriebs des Dampfmotors 1, 120 jedoch mit dem entspannten Wasserdampf vermischt und mit diesem ausgegeben wird. Aus diesem Grund weist der vom Dampfmotor 1, 120 ausgegebene entspannte Wasserdampf eine relativ große Menge an Öl auf.

Dem Dampfmotor 1, 120 ist ein Kondensator 150 zur Kondensation des entspannten Wasserdampfs, welcher einen Druck von ca. 0,15 bar und eine Temperatur von ca. 55°C aufweist, wenn dieser den Dampfmotor 120 verlässt, nachgeschalten.

Der kondensierte Wasserdampf, welcher weiterhin einen großen Anteil an Öl enthält, wird über eine Wassersäule 190, welche den Druck des kondensierten Wasserdampfs auf ca. 0,25 bar erhöht, einer Kondensat-Absaugpumpe (bzw. Zirkulationspumpe) 170, insbesondere Kolbenpumpe, zugeführt bzw. von dieser angesaugt. Die Kondensat-Absaugpumpe erhöht den Druck des kondensierten Wasserdampfs bzw. des nun vorliegenden Öl-Wassers-Gemischs auf ungefähr 1,50 bar und fördert das Öl-Wasser-Gemisch zu einer Vorrichtung 140 zum Trennen von Öl und Wasser.

Wie der Fig. 1 ferner entnommen werden kann, wird das getrennte bzw. abgeschiedene Öl zurück zu einem Kurbelwellenraum des Dampfmotors geleitet oder zur Feinabdichtung in den Dampfmotor eingespritzt und das gereinigte Wasser an einen Speisewassertank 160 geleitet, welcher das aufbereitete bzw. gereinigte Wasser dem Dampferzeuger 110 erneut zur Dampferzeugung zur Verfügung stellt, womit der Kreislauf geschlossen ist.

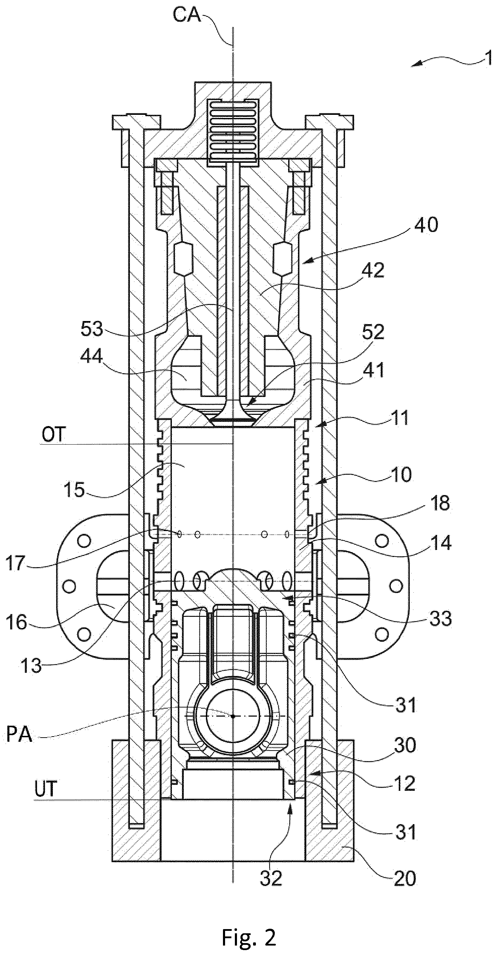

Figur 2 zeigt eine schematische Schnittdarstellung eines Dampfmotors gemäß einer Ausführungsform der vorliegenden Erfindung. Der gezeigte Dampfmotor 1 weist einen Zylinder 10 der ein oberes Ende 11 und ein unteres Ende 12 aufweist. Am unteren Ende 12 ist der Zylinder 10 mit einem Kurbelgehäuse 20 verbunden. Mehrere Auslassöffnungen 13 sind in Umfangsrichtung in der Zylinderwand/Arbeitsraumwand 14 des Zylinders 10 vorgesehen. Die Auslassöffnungen 13 verbinden eine Zylinderkammer/Arbeitsraum 15 mit einer Ringkammer 16, um verbrauchten Dampf von dem Arbeitsraum 15 abzulassen bzw. abzuführen. Die Auslassöffnungen 13 sind nahe einem unteren Totpunkt UT eines Kolbens 30 angeordnet, welcher sich in der gezeigten Ansicht im unteren Totpunkt UT befindet.

Der Kolben 30 ist translatorisch entlang einer Mittelachse CA des Zylinders 10 zwischen dem unten Totpunkt UT und einem oberen Totpunkt beweglich. Der Kolben 30 ist über eine nichtdargestellte Kolbenverbindungsstange oder Kolbensteuerungsstange mit einer nicht gezeigten Kurbelwelle verbunden, die in dem Kurbelgehäuse 20 untergebracht ist. Der Kolben 30 weist an seinem unteren Ende 32 einen Dichtring 31 und an seinem oberen Ende 33 mehrere Dichtringe 31 auf.

Der Motor umfasst ferner eine Zylinderkopfeinheit 40. Die Zylinderkopfeinheit 40 weist einen ersten Gehäusekörper 41 und einen zweiten Gehäusekörper 42 auf. Ferner ist in dem ersten Gehäusekörper 41 eine Dampfkammer 44 vorgesehen, welche über eine Öffnung mit dem Arbeitsraum 15 kommuniziert. Die Öffnung kann mittels eines Ventilelements 52, das eine in einer Ventilführung translatorisch geführte Welle 53 aufweist, geöffnet und verschlossen werden, womit das Einströmen von frischem Dampf (Heißdampf, der unter Hochdruck steht) in den Arbeitsraum gesteuert werden kann.

Ferner weist der Dampfmotor wie in Figur 2 ersichtlich ist, mehrere Öl-Einspritzöffnungen 17 auf, welche oberhalb der Auslassöffnungen 13 in die Arbeitsraumwand 14 eingebracht sind, und eine Kommunikation zwischen der Außenseite der Arbeitsraumwand 14 und dem Arbeitsraum 15, der durch die Arbeitsraumwand 14, eine Unterseite des ersten Gehäusekörpers 41, zusammen mit dem Ventilelement 52, und einer Oberseite des Kolbens 30 definiert wird, ermöglichen. In der gezeigten Ausführungsform sind die Auslassöffnungen 13 auf einer gemeinsamen gedachten Linie angeordnet, welche senkrecht zu der Zentralachse CA verläuft und in Richtung oberer Totpunkt OT von den Auslassöffnungen 13 beabstandet ist.

Wie der Figur 2 entnommen werden kann, sind in der gezeigten Ausführungsform die Öl-Einspritzöffnungen 17 über den Umfang der Arbeitsraumwand 14 gleichmäßig verteilt angeordnet. Darunter ist zu verstehen, dass ein Winkel zwischen zwei benachbarten Öl-Einspritzöffnungen 17 jeweils gleich groß ist. In der gezeigten Ausführungsform sind über den Umfang der Arbeitsraumwand 14 zwölf Öl-Einspritzöffnungen 17 vorgesehen.

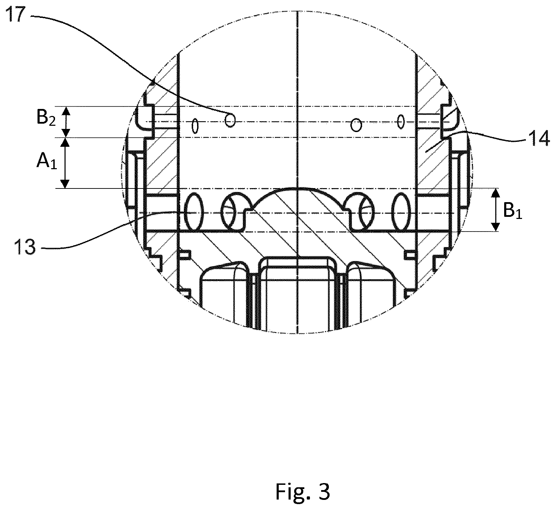

Figur 3 zeigt eine vergrößerte Teilansicht der schematischen Schnittdarstellung von Figur 2, um die Anordnung der erfindungsgemäßen Öl-Einspritzöffnungen weiter zu verdeutlichen. In der Figur 3 sind zum leichteren Verständnis der Erfindung die beiden gedachten ringförmigen Bereiche dargestellt, wobei der erste ringförmige Bereich, in welchem die Auslassöffnungen 13 angeordnet sind, in Richtung der Zentralachse CA, also in der Figur 3 gesehen in vertikaler Richtung, eine Breite B₁ aufweist. Der zweite ringförmige Bereich, in dem die Öl-Einspritzöffnungen 17 angeordnet sind, weist in Richtung der Zentralachse CA, also in der Figur 3 gesehen in vertikaler Richtung, eine Breite B₂ auf. Des Weiteren ist in der Figur 3 der bereits oben erläuterte Abstand A₁, der eine Distanz zwischen dem ersten ringförmigen Bereich und dem zweit ringförmigen Bereich definiert, dargestellt. Wie der Figur 3 ebenfalls entnommen werden kann, liegen in der dargestellten Ausführungsform zur Veranschaulichung der Erfindung nicht wie bei der Figur 2 die Öl-Einspritzöffnungen 17 auf einer gemeinsamen Linie, sondern sind in Richtung der Zentralachse CA unterschiedlich von den Auslassöffnungen 13, welche weiterhin auf einer gemeinsamen Linie liegen, beabstandet. Erfindungsgemäß ist es lediglich vorteilhaft, wenn die Öl-Einspritzöffnungen in dem zweiten ringförmigen Bereich liegen.

Aus der vorhergehenden Beschreibung erkennt der Fachmann, dass verschiedene Modifikationen und Variationen der Vorrichtung und des Verfahrens der Erfindung durchgeführt werden können, ohne den Umfang der Erfindung zu verlassen. Ferner wurde die Erfindung in Bezug auf bestimmte Ausführungsformen beschrieben, die jedoch nur zum besseren Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können. Deshalb wird der Umfang der Erfindung durch die folgenden Ansprüche gekennzeichnet.

## Patentansprüche

1. Kolbendampfmotor (1) der bevorzugt für die Erzeugung elektrischen Stroms verwendet wird, umfassend:
- mindestens einen Zylinder (10), der einen Arbeitsraum (15) umschließt,
- einen im Arbeitsraum (15) zwischen einem oberen Totpunkt (OT) und einem unteren Totpunkt (UT) entlang einer Zentralachse (CA) des Zylinders (10) hin und her beweglichen Kolben (30), wobei der Arbeitsraum (15) über seinen Umfang von einer in den Zylinder (10) eingesetzten oder durch diesen gebildeten Arbeitsraumwand (14) umschlossen ist, und
- eine Vielzahl von Auslassöffnungen (13), insbesondere Abgas-Auslassöffnungen (13), die in Umfangsrichtung in der Arbeitsraumwand (14) vorgesehen sind,
**dadurch gekennzeichnet,**
**dass** oberhalb der Auslassöffnungen (13) eine Vielzahl von Öl-Einspritzöffnungen (17), bevorzugt in Umfangsrichtung verteilt, in der Arbeitsraumwand (14) vorgesehen ist.

2. Kolbendampfmotor (1) nach Anspruch 1, bei dem die Auslassöffnungen (13), insbesondere Abgas-Auslassöffnungen (13), in einem ersten ringförmigen Bereich angeordnet sind, der in Umfangsrichtung der Arbeitsraumwand (14) senkrecht zur Zentralachse (CA) verläuft und bevorzugt in Richtung der Zentralachse (CA) gesehen eine Breite (B₁) von 80 bis 120 mm, bevorzugt 50 bis 80 mm, weiter bevorzugt 20 bis 40 mm aufweist.

3. Kolbendampfmotor (1) nach Anspruch 1 oder 2, bei dem die Öl-Einspritzöffnungen (17) in einem zweiten ringförmigen Bereich angeordnet sind, der in Umfangsrichtung der Arbeitsraumwand (14) senkrecht zur Zentralachse (CA) verläuft und bevorzugt in Richtung der Zentralachse (CA) gesehen eine Breite (B₂) von 5 bis 10 mm, weiter bevorzugt von 2 bis 5 mm, weiter bevorzugt von 1 bis 2 mm aufweist.

4. Kolbendampfmotor (1) nach Anspruch 3, der auf Anspruch 2 rückbezogen ist, bei dem ein Abstand (A₁) zwischen dem ersten ringförmigen Bereich der Auslassöffnungen (13) und dem zweiten ringförmigen Bereich der Öl-Einspritzöffnungen (17) in Richtung der Zentralachse (CA) gesehen in einem Bereich von 10 bis 50 mm, bevorzugt 15 bis 40 mm, weiter bevorzugt 20 bis 35 mm liegt.

5. Kolbendampfmotor (1) nach einem der Ansprüche 2 bis 4, bei dem der erste ringförmige Bereich der Auslassöffnungen (13), insbesondere eine gedachte Mittellinie des Bereichs, die senkrecht zur Zentralachse (CA) verläuft, vom unteren Totpunkt (UT) in Richtung des oberen Totpunkts (OT) um 5% bis 25%, bevorzugt 10% bis 20%, des Kolbenhubs beabstandet angeordnet ist.

6. Kolbendampfmotor (1) nach einem der Ansprüche 2 bis 5, bei dem der zweite ringförmige Bereich der Öl-Einspritzöffnungen (13), insbesondere eine gedachte Mittelinie des Bereichs, die senkrecht zur Zentralachse (CA) verläuft, vom oberen Totpunkt (OT) in Richtung des unteren Totpunkts (UT) um mindestens 40% des Kolbenhubs und um maximal 60% des Kolbenhubs beabstandet angeordnet ist.

7. Kolbendampfmotor (1) nach einem der Ansprüche 1 bis 6, bei dem die Öl-Einspritzöffnungen (17) Bohrungen mit einem Durchmesser von weniger als 3 mm, bevorzugt weniger als 2 mm, sind.

8. Kolbendampfmotor (1) nach einem der Ansprüche 1 bis 7, bei dem die Öl-Einspritzöffnungen (17) um den Umfang der Arbeitsraumwand (14) gleichmäßig verteilt angeordnet sind und bevorzugt zwölf, oder bevorzugt acht, Öl-Einspritzöffnungen (17) vorgesehen sind.

9. Kolbendampfmotor (1) nach einem der Ansprüche 1 bis 7, bei dem die Öl-Einspritzöffnungen (17) am Umfang der Arbeitsraumwand (14) über einen Winkelbereich von 70° bis 120° gleichmäßig verteilt angeordnet sind, wobei der Winkelbereich mit den Öl-Einspritzöffnungen (17) an der Seite der Arbeitsraumwand (14) angeordnet ist, an welcher während des Betriebs des Motors der Kolben anliegt, wobei bevorzugt vier Öl-Einspritzöffnungen (17) in dem Winkelbereich mit Öl-Einspritzöffnungen vorgesehen sind.

10. Kolbendampfmotor (1) nach einem der vorhergehenden Ansprüche, ferner umfassend einen Ringkanal (18), der an der Außenseite der Arbeitsraumwand (14) vorgesehen ist und die Öl-Einspritzöffnungen (17) derart miteinander verbindet, dass diese zentral, bevorzugt über einen gemeinsamen Öl-Anschluss, mit Öl versorgbar sind.

11. Kolbendampfmotor (1) nach einem der vorhergehenden Ansprüche, ferner umfassend eine Steuerung, die dazu eingerichtet ist, eine Öl-Versorgungseinrichtung derart zu steuern, dass die Öl-Einspritzöffnungen kontinuierlich oder diskontinuierlich mit Öl versorgt werden.

12. Kolbendampfmotor (1) nach einem der vorhergehenden Ansprüche, ferner umfassend eine Druckdämpfungsleitung, welche zwischen dem Öl-Anschluss des Ringkanals (18) und der Öl-Versorgungseinrichtung angeordnet ist und aus einer gewickelten Leitung mit einer Länge von 3 bis 5 Metern und einem Wicklungsdurchmesser von 40 bis 60 mm besteht.

13. Kolbendampfmotor (1) nach Anspruch 12, ferner weist die Druckdämpfungsleitung an dem der Öl-Versorgungseinrichtung zugewandten Ende ein Rückschlagventil auf, welches in Richtung der Öl-Versorgung bei Druckspitzen schließt.

14. Kraft-Wärme-Kopplungsanlage, umfassend:
einen Dampferzeuger (110), und
einen Kolbendampfmotor (1, 120) nach einem der vorhergehenden Ansprüche 1 bis 13, wobei der Kobendampfmotor mit einem Generator (130) zur Erzeugung elektrischen Stroms gekoppelt ist.

## Claims

1. Piston steam engine (1), which is preferably used to generate electrical power, comprising:
- at least one cylinder (10), which encloses a working chamber (15),
- a piston (30), which is movable in the working chamber (15) back and forth along a central axis (CA) of the cylinder (10) between an upper dead centre (OT) and a lower dead centre (UT), wherein the working chamber (15) is enclosed over its circumference by a working chamber wall (14) inserted in the cylinder (10) or formed thereby, and
- a plurality of outlet openings (13), in particular exhaust gas outlet openings (13), which are provided in the working chamber wall (14) in the circumferential direction,
**characterised in that**
a plurality of oil injection openings (17) is provided above the outlet openings (13) in the working chamber wall (14), preferably distributed in the circumferential direction.

2. Piston steam engine (1) according to claim 1, wherein the outlet openings (13), in particular exhaust gas outlet openings (13), are arranged in a first annular region, which extends in the circumferential direction of the working chamber wall (14) perpendicularly to the central axis (CA) and preferably has a width (B₁), viewed in the direction of the central axis (CA), of 80 to 120 mm, preferably 50 to 80 mm, more preferably 20 to 40 mm.

3. Piston steam engine (1) according to claim 1 or 2, wherein the oil injection openings (17) are arranged in a second annular region, which extends in the circumferential direction of the working chamber wall (14) perpendicularly to the central axis (CA) and preferably has a width (B₂), viewed in the direction of the central axis (CA), of 5 to 10 mm, more preferably 2 to 5 mm, more preferably 1 to 2 mm.

4. Piston steam engine (1) according to claim 3, which refers back to claim 2, wherein a distance (A₁) between the first annular region of the outlet openings (13) and the second annular region of the oil injection openings (17), viewed in the direction of the central axis (CA), is in a range of 10 to 50 mm, preferably 15 to 40 mm, more preferably 20 to 35 mm.

5. Piston steam engine (1) according to any of claims 2 to 4, wherein the first annular region of the outlet openings (13), in particular an imaginary centre line of the region which extends perpendicularly to the central axis (CA), is arranged so as to be spaced apart from the lower dead centre (UT) in the direction of the upper dead centre (OT) by 5% to 25%, preferably 10% to 20%, of the piston stroke.

6. Piston steam engine (1) according to any of claims 2 to 5, wherein the second annular region of the oil injection openings (13), in particular an imaginary centre line of the region which extends perpendicularly to the central axis (CA), is arranged so as to be spaced apart from the upper dead centre (OT) in the direction of the lower dead centre (UT) by at least 40% of the piston stroke and by at most 60% of the piston stroke.

7. Piston steam engine (1) according to any of claims 1 to 6, wherein the oil injection openings (17) are bores having a diameter of less than 3 mm, preferably less than 2 mm.

8. Piston steam engine (1) according to any of claims 1 to 7, wherein the oil injection openings (17) are arranged so as to be uniformly distributed around the circumference of the working chamber wall (14) and preferably, twelve, or preferably eight, oil injection openings (17) are provided.

9. Piston steam engine (1) according to any of claims 1 to 7, wherein the oil injection openings (17) are arranged so as to be uniformly distributed on the circumference of the working chamber wall (14) over an angle range of 70° to 120°, wherein the angle range with the oil injection openings (17) is arranged on the side of the working chamber wall (14) against which the piston abuts during operation of the engine, wherein preferably four oil injection openings (17) are provided in the angle range with the oil injection openings.

10. Piston steam engine (1) according to any of the preceding claims, further comprising an annular channel (18), which is provided on the outside of the working chamber wall (14) and interconnects the oil injection openings (17) such that they can be supplied with oil centrally, preferably via a common oil port.

11. Piston steam engine (1) according to any of the preceding claims, further comprising a controller, which is configured to control an oil supply means such that the oil injection openings are supplied with oil continuously or discontinuously.

12. Piston steam engine (1) according to any of the preceding claims, further comprising a pressure attenuation line, which is arranged between the oil port of the annular channel (18) and the oil supply means and consists of a coiled line with a length of 3 to 5 metres and a coil diameter of 40 to 60 mm.

13. Piston steam engine (1) according to claim 12, the pressure attenuation line further comprising a non-return valve on the end facing the oil supply means, which non-return valve closes in the direction of the oil supply in the event of pressure peaks.

14. Cogeneration plant, comprising:
a steam generator (110), and
a piston steam engine (1, 120) according to any of the preceding claims 1 to 13, wherein the piston steam engine is coupled to a generator (130) for generating electrical power.

## Revendications

1. Moteur à vapeur à piston (1) qui est utilisé de préférence pour la production de courant électrique, comprenant :
- au moins un cylindre (10), qui renferme une chambre de travail (15),
- un piston (30) mobile en va-et-vient dans la chambre de travail (15) entre un point mort haut (OT) et un point mort bas (UT) le long d'un axe central (CA) du cylindre (10), dans lequel la chambre de travail (15) est entourée sur sa périphérie par une paroi de chambre de travail (14) insérée dans le cylindre (10) ou formée par celui-ci, et
- une pluralité d'orifices de sortie (13), en particulier des orifices de sortie de gaz d'échappement (13), qui sont prévus dans la paroi de chambre de travail (14) dans la direction circonférentielle,
**caractérisé en ce**
**qu'**une pluralité d'orifices d'injection d'huile (17), de préférence répartis dans la direction circonférentielle, est prévue dans la paroi de chambre de travail (14) au-dessus des orifices de sortie (13).

2. Moteur à piston à vapeur (1) selon la revendication 1, dans lequel les orifices de sortie (13), en particulier les orifices de sortie de gaz d'échappement (13), sont disposés dans une première étendue annulaire qui, dans la direction circonférentielle de la paroi de chambre de travail (14), s'étend perpendiculairement à l'axe central (CA) et présente de préférence, vu dans la direction de l'axe central (CA), une largeur (B₁) de 80 à 120 mm, de préférence de 50 à 80 mm, plus préférablement de 20 à 40 mm.

3. Moteur à piston à vapeur (1) selon la revendication 1 ou 2, dans lequel les orifices d'injection d'huile (17) sont disposés dans une seconde étendue annulaire qui, dans la direction circonférentielle de la paroi de chambre de travail (14), s'étend perpendiculairement à l'axe central (CA) et présente de préférence, vu dans la direction de l'axe central (CA), une largeur (B₂) de 5 à 10 mm, plus préférablement de 2 à 5 mm, plus préférablement de 1 à 2 mm.

4. Moteur à vapeur à piston (1) selon la revendication 3, qui est dépendante de la revendication 2, dans lequel une distance (A₁) entre la première étendue annulaire des orifices de sortie (13) et la seconde étendue annulaire des orifices d'injection d'huile (17), vue dans la direction de l'axe central (CA), se situe dans une plage de 10 à 50 mm, de préférence de 15 à 40 mm, plus préférablement de 20 à 35 mm.

5. Moteur à piston à vapeur (1) selon l'une quelconque des revendications 2 à 4, dans lequel la première étendue annulaire des orifices de sortie (13), en particulier une ligne médiane imaginaire de la étendue, qui est perpendiculaire à l'axe central (CA), est espacée du point mort bas (UT) en direction du point mort haut (OT) de 5 % à 25 %, de préférence de 10 % à 20 %, de la course de piston.

6. Moteur à piston à vapeur (1) selon l'une quelconque des revendications 2 à 5, dans lequel la seconde étendue annulaire des orifices d'injection d'huile (13), en particulier une ligne médiane imaginaire de la étendue, qui est perpendiculaire à l'axe central (CA), est espacée du point mort haut (OT) en direction du point mort bas (UT) d'au moins 40 % de la course de piston et d'au plus 60 % de la course de piston.

7. Moteur à piston à vapeur (1) selon l'une quelconque des revendications 1 à 6, dans lequel les orifices d'injection d'huile (17) sont des alésages avec un diamètre inférieur à 3 mm, de préférence inférieur à 2 mm.

8. Moteur à piston à vapeur (1) selon l'une quelconque des revendications 1 à 7, dans lequel les orifices d'injection d'huile (17) sont répartis uniformément sur la périphérie de la paroi de chambre de travail (14) et de préférence douze, ou de préférence huit, orifices d'injection d'huile (17) sont prévus.

9. Moteur à piston à vapeur (1) selon l'une quelconque des revendications 1 à 7, dans lequel les orifices d'injection d'huile (17) sont répartis uniformément sur la périphérie de la paroi de chambre de travail (14) sur une plage angulaire de 70° à 120°, dans lequel la plage angulaire avec les orifices d'injection d'huile (17) est disposée sur le côté de la paroi de chambre de travail (14), contre lequel le piston s'appuie pendant le fonctionnement du moteur, dans lequel quatre orifices d'injection d'huile (17) sont de préférence prévus dans la plage angulaire avec les orifices d'injection d'huile.

10. Moteur à piston à vapeur (1) selon l'une quelconque des revendications précédentes, comprenant en outre un canal annulaire (18), qui est prévu sur le côté extérieur de la paroi de chambre de travail (14) et qui connecte entre eux les orifices d'injection d'huile (17) de sorte que ceux-ci peuvent être alimentés en huile de manière centrale, de préférence par l'intermédiaire d'un raccord d'huile commun.

11. Moteur à vapeur à piston (1) selon l'une quelconque des revendications précédentes, comprenant en outre une commande, qui est configurée pour commander un dispositif d'alimentation en huile de sorte que les orifices d'injection d'huile soient alimentés en huile de manière continue ou discontinue.

12. Moteur à piston à vapeur (1) selon l'une quelconque des revendications précédentes, comprenant en outre une ligne d'amortissement de pression, laquelle est disposée entre le raccord d'huile du canal annulaire (18) et le dispositif d'alimentation en huile et est constituée d'une ligne bobinée avec une longueur de 3 à 5 mètres et un diamètre de bobinage de 40 à 60 mm.

13. Moteur à piston à vapeur (1) selon la revendication 12, dans lequel la ligne d'amortissement de pression présente en outre, à l'extrémité tournée vers le dispositif d'alimentation en huile, un clapet de retenue, lequel se ferme en direction de l'alimentation en huile en cas de pics de pression.

14. Installation de cogénération, comprenant :
un générateur de vapeur (110), et
un moteur à vapeur à piston (1, 120) selon l'une quelconque des revendications précédentes 1 à 13, dans lequel le moteur à vapeur à piston est couplé à un générateur (130) de courant électrique.
